# EUROPÄISCHE PATENTSCHRIFT

(11) **EP 1 279 132 B1**
(45) Veröffentlichungstag und Bekanntmachung des Hinweises auf die Patenterteilung: **30.06.2004**
(21) Anmeldenummer: 01935984.3
(22) Anmeldetag: 24.04.2001
(51) Int. Cl.: G06F 17/60, G07F 19/00, H04L 9/08

(54) **VERFAHREN, BEI DEM EIN KUNDE EINE GELDWERTE INFORMATION AUS EINER LADESTELLE ABRUFT**
METHOD, ACCORDING TO WHICH A CUSTOMER ACCESSES MONETARY-VALUE DATA FROM A CHARGING POINT
PROCEDE PERMETTANT A UN CLIENT D'APPELER UNE INFORMATION SUR UNE VALEUR MONETAIRE A PARTIR D'UN POINT DE CHARGEMENT

(30) Priorität: 27.04.2000 DE 10020565
(43) Veröffentlichungstag der Anmeldung: 29.01.2003
(73) Patentinhaber: Deutsche Post AG, 53113 Bonn (DE)
(72) Erfinder: LANG, Jürgen, 51429 Bergisch Gladbach (DE); MEYER, Bernd, 53639 Königswinter (DE)
(74) Vertreter: Jostarndt, Hans-Dieter, Dr. Dipl.-Phys.
(86) Internationale Anmeldenummer: PCT/DE2001/001552
(87) Internationale Veröffentlichungsnummer: WO 2001/082148

(56) Entgegenhaltungen:
- WO-A-98/22915
- WO-A-99/64995
- US-A- 4 630 201
- US-A- 5 987 140
- US-A- 6 047 268

## Beschreibung

Die Erfindung betrifft ein Verfahren, bei dem ein Kunde eine geldwerte Information aus einer Ladestelle abruft.

Vor allem bei Bezahlvorgängen, die über das Internet erfolgen, besteht ein Bedarf, erbrachte Dienstleistungen und übersandte Waren schnell und sicher zu bezahlen.

Elektronische Zahlvorgänge müssen hohen Anforderungen an die Datensicherheit und Benutzerauthentizität genügen.

Die internationale Patentanmeldung mit der Veröffentlichungsnummer WO 99/64995 offenbart ein Verfahren, bei dem ein Kunde eine geldwerte Information aus eine Ladestelle abruft, wobei in der Ladestelle eine Zufallszahl und eine Zahlungsidentifikationsnummer, die Daten des Kunden enthält, gebildet werden, wobei ein Kundensystem eine Zeichenkette mit Kryptoinformationen erzeugt, wobei ein Verkäufer die Zeichenkette als geldwerten Beleg für eine Zahlung erhält, wobei der Verkäufer die Zeichenkette zur Überprüfung ihrer Gültigkeit und zur Veranlassung einer Zahlung an ein eCommerce-Center einreicht und wobei das eCommerce-Center die Zeichenkette entschlüsselt.

Aus der US-Patentschrift 4 630 201 ist ein Sicherheitssystem für elektronische Zahlvorgänge mit einer Zuordnungsmöglichkeit zwischen einer Zufallszahl und einem Zahlungsbetrag bekannt.

Erfindungsgemäß wird diese Aufgabe durch die Merkmale des Anspruchs 1 gelöst.

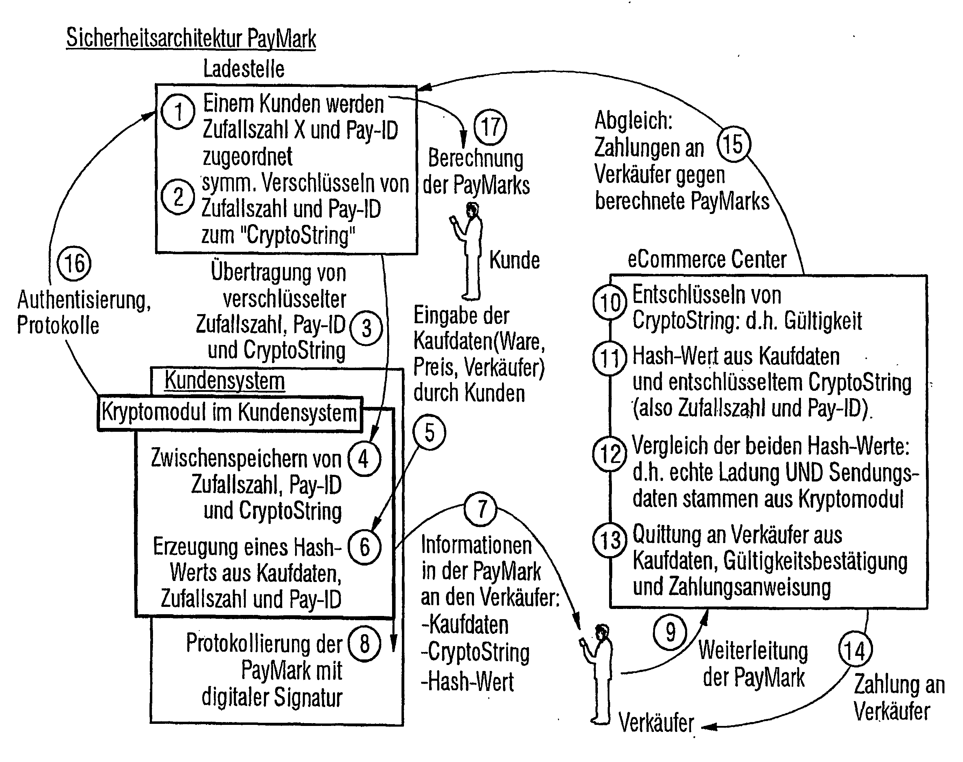

Weitere Vorteile, Besonderheiten und zweckmäßige.
Weiterbildung der Erfindung ergeben sich aus den Unteransprüchen und der nachfolgenden Darstellung eines bevorzugten Ausführungsbeispiels anhand der Zeichnung.

Die Zeichnung zeigt eine Prinzipdarstellung von vorteilhaft in eine Sicherheitsarchitektur des Zahlungsvorgangs integrierbaren Verfahrensschritten.

Die Erfindung betrifft insbesondere die Herstellung von PayMarks, d.h. geldwerten Kryptoinformationen.

### Funktionsweise von PCF PayMark

PCF PayMark stellt eine Erweiterung der PC-Frankierung (PCF) dar. Mit einigen Ergänzungen am System ist es möglich, anstelle von Freimachungsvermerken sogenannte PayMarks, also geldwerte Kryptoinformationen zu generieren. Diese PayMarks können zum Beispiel in elektronischer Form im Rahmen des eCommerce-Center, allerdings auch in anderer Form (zum Beispiel Papier etc.) an einen Verkäufer als Bezahlung für einen Kaufvorgang übergeben werden. Der Verkäufer kann diese geldwerten PayMarks in einem eCommerce-Center auf Gültigkeit überprüfen lassen und erhält von diesem eCommerce-Center den entsprechenden Wert erstattet.

Die Sicherheitsarchitektur von PCF PayMark gestaltet sich wie folgt:

### Erläuterungen zum Ablauf

Bei dem dargestellten Prozess handelt es sich im Prinzip um einen Kreisprozess, der in Abhänigkeit davon, ob es sich um ein Kredit- oder ein Debit-Verfahren von PCF handelt, regelmäßig oder unregelmäßig zum Nachladen von Debit-Beträgen durchlaufen wird. Der eigentliche Beginn des Kreisprozesses ist der in der Abbildung mit Nr. 16 gekennzeichnete Schritt der Authentisierung des Kundensystems gegenüber einer zentralen "Ladestelle". Aus Gründen der besseren Übersicht beginnt in dieser Darstellung der Kreisprozess jedoch erst nach erfolgter Authentisierung mit dem ersten Prozessschnitt:
1. In der Ladestelle wird eine Zufallszahl X und eine sogenannte Pay-ID PID gebildet, die Informationen zum Kunden, zur Höhe seiner Kreditwürdigkeit beim Micropayment-Kauf und zum Gültigkeitszeitraum der PID enthält.
2. In der Ladestelle werden Zufallszahl X und Pay-ID PID zu einem sogenannten "CryptoString" derart verschlüsselt (z.B. symmetrisch), dass nur das eCommerce-Center in der Lage ist, aus diesem CryptoString wieder die Zufallszahl und die PID zu entschlüsseln.
3. Zufallszahl X, Pay-ID PID und der CryptoString werden derart (z.B. asymmetrisch) verschlüsselt, dass nur das Kryptomodul im Kundensystem in der Lage ist, diese Informationen wieder zu entschlüsseln.
4. Im Kryptomodul im Kundensystem werden die Zufallszahl X, die Pay-ID-PID und der CryptoString zwischengespeichert. Anschließend kann die Kommunikation mit der Ladestelle beendet werden.
5. Der Kunde gibt im Rahmen des Kaufvorgangs Informationen (z.B. Ware/Produkt, Preis, Anbieter/Verkäufer, Datum etc.) in das Kryptomodul ein.
6. Das Kryptomodul erzeugt einen Hash-Wert unter anderem aus den Kaufdaten, der Zufallszahl, der Pay-ID PID (und gegebenenfalls weiteren Informationen).
7. Das Kundensystem erzeugt eine sogenannte PayMark, das heißt, eine Zeichenkette mit Kryptoinformationen, die unter anderem folgende Informationen enthält: die Kaufdaten im Klartext, den zwischengespeicherten CryptoString und den erzeugten Hash-Wert. Diese PayMark kann zum Beispiel elektronisch an den Verkäufer übermittelt werden (zum Beispiel mit einer Email oder online über das WorldWideWeb), sie kann jedoch auch über andere Datenträger oder auch ausgedruckt auf Papier an den Verkäufer übermittelt werden.
8. Das Kryptomodul signiert die PayMark mit allen sicherheitsrelevanten Informationen digital mit dem eigenen privaten Schlüssel und legt sie in einer Protokolldatei im Kundensystem ab.
9. Der Verkäufer erhält die PayMark als geldwerten Beleg für eine Zahlung und reicht sie zur Prüfung ihrer Gültigkeit und zur Veranlassung einer Zahlung an ihn an das eCommerce-Center ein. In speziellen Ausführungsformen des Systems ist es auch möglich, dass die PayMark unter Umgehung des Verkäufers unmittelbar an das eCommerce-Center übermittelt wird.
10. In einem ersten Prüfschritt wird der CryptoString, der so verschlüsselt war, dass nur das eCommerce-Center diesen entschlüsseln konnte, zu Zufallszahl X und Pay-ID PID entschlüsselt.
11. Ebenso wie das Kundensystem bildet nun das eCommerce-Center einen Hash-Wert, unter anderem aus den sendungsspezifischen Daten, der aus dem CryptoString entschlüsselten Zufallszahl und der Pay-ID CID (und gegebenenfalls weiteren Informationen) .
12. Durch einen Vergleich des soeben selbst erzeugten Hash-Wertes mit dem in der PayMark empfangenen Hash-Wert wird festgestellt, ob zur Herstellung der PayMark tatsächlich das (vertrauenswürdige) Kryptomodul im Kundensystem verwendet wurde. Womit die Gültigkeit der PayMark belegt wird.
13. Vom eCommerce-Center wird dem Verkäufer eine Quittung bestehend aus den Kaufdaten, der Gültigkeitsbestätigung der PayMark und der Bestätigung der Zahlungsanweisung erstellt und zugesandt.
14. Die Zahlungstransaktion an den Verkäufer wird gegebenenfalls mit einer zeitlichen Verzögerung vorgenommen.
15. Zum Abgleich werden die an Verkäufer veranlassten Zahlungen des eCommerce-Centers mit den Werten verglichen, die einem Kunden zur Herstellung von PayMarks zur Verfügung standen.
16. Die Werte, die ein Kunde zur Herstellung von PayMarks benutzen kann, werden ihm über die Ladestelle zur Verfügung gestellt. Hierzu ist eine Authentisierung des Kundens erforderlich, bei der auch die Protokolldaten der bereits hergestellten PayMarks (vergleiche Punkt 8) übermittelt werden.
17. In Abhängigkeit von Credit- oder Debit-Verfahren werden die hergestellten PayMarks entweder im Vorfeld dem Kunden in Rechnung gestellt (Ladebetrag nach Debit-Verfahren) oder im Nachhinein anhand der Protokolldaten berechnet. Anschließend kann wieder mit Punkt 1, das heißt, der Vorbereitung einer neuen Zufallszahl X und einer neuen Pay-ID PID, fortgefahren werden.

## Patentansprüche

1. Verfahren, bei dem ein Kunde eine geldwerte Information aus einer Ladestelle abruft, wobei in der Ladestelle eine Zufallszahl (X) und eine Zahlungsidentifikationsnummer (PID), die Daten des Kunden enthält, gebildet werden, wobei ein Kundensystem eine Zeichenkette erzeugt mit Kryptoinformationen, wobei ein Verkäufer die Zeichenkette als geldwerten Betrag für eine Zahlung erhält, wobei der Verkäufer die Zeichenkette zur Überprüfung ihrer Gültigkeit und zur Veranlassung einer Zahlung an ein eCommerce-Center einreicht, wobei das eCommerce-Center die Zeichenkette entschlüsselt,
dass in der Ladestelle die Zufallszahl (X) und die Zahlungsidentifikationsnummer (PID) so zu einer kryptografischen Einheit verbunden werden, dass nur ein eCommerce-Center in der Lage ist, aus der kryptografischen Einheit wieder die Zufallszahl (X) und die Zahlungsidentifikationsnummer (PID) zu entschlüsseln, dass das Kundensystem einen Hash-Wert aus der zufallszahl (X), der Zahlungsidentifikationsnummer (PID) und aus Kaufdaten erzeugt, dass die Zeichenkette mit Kryptoinformationen die Kaufdaten im Klartext, die kryptografische Einheit und den erzeugten Hash-Wert enthält, und dass das eCommerce-Center einen Hash-Wert aus der aus der Zeichenkette entschlüsselten Zufallszahl und der Zahlungsidentifikationsnummer (PID) bildet, und dass das eCommerce-Center einen Vergleich des selbst erzeugten Hash-Wertes mit dem übertragenen Hash-Wert durchführt.

2. Verfahren nach Anspruch 1,
**dadurch gekennzeichnet,**
**dass** in der Ladestelle die Zufallszahl (X) und die Zahlungsidentifikationsnummer (PID) derart zu der kryptografischen Einheit verbunden werden, dass nur ein externes eCommerce-Center in der Lage ist, aus der kryptografischen Einheit wieder die Zufallszahl (X) und die Zahlungsidentifikationsnummer (PID) zu entschlüsseln.

3. Verfahren nach einem der beiden Ansprüche 1 oder 2,
**dadurch gekennzeichnet,**
**dass** die Zufallszahl (X), die Zahlungsidentifikationsnummer (PID) und die kryptografische Einheit in einem Kryptomodul im Kundensystem zwischengespeichert werden.

4. Verfahren nach Anspruch 3,
**dadurch gekennzeichnet,**
**dass** der Kunde bei einem Kaufvorgang Informationen in das Kryptomodul eingibt.

5. Verfahren nach einem oder mehreren der Ansprüche 3 oder 4,
**dadurch gekennzeichnet,**
**dass** das Kryptomodul den Hash-Wert erzeugt.

6. Verfahren nach Anspruch 5,
**dadurch gekennzeichnet,**
**dass** der Hash-Wert unter Einbeziehung von den Daten des Kaufs, der Zufallszahl (X) und der Zahlungsidentifikationsnummer (PID) gebildet wird.

7. Verfahren nach einem oder mehreren der vorangegangenen Ansprüche,
**dadurch gekennzeichnet,**
**dass** die Zeichenkette die Kaufdaten im Klartext, die kryptografische Einheit und den Hash-Wert enthält.

8. Verfahren nach einem oder mehreren der Ansprüche 3 bis 7,
**dadurch gekennzeichnet,**
**dass** das Kryptomodul die Zeichenkette digital signiert und in einer Protokolldatei ablegt.

9. Verfahren nach einem oder mehreren der vorangegangenen Ansprüche,
**dadurch gekennzeichnet,**
**dass** die Zeichenkette unmittelbar an das eCommerce-Center übermittelt wird.

10. Verfahren nach einem oder mehreren der vorangegangenen Ansprüche,
**dadurch gekennzeichnet,**
**dass** die Zeichenkette so verschlüsselt ist, dass nur das eCommerce-Center sie entschlüsseln kann.

11. Verfahren nach einem oder mehreren der vorangegangenen Ansprüche,
**dadurch gekennzeichnet,**
**dass** das eCommerce-Center durch den Vergleich des von ihm erzeugten Hash-Wertes mit dem in der Zeichenkette enthaltenen Hash-Wert feststellt, ob zur Herstellung der Zeichenkette tatsächlich ein zur Bezahlung geeignetes Kryptomodul verwendet wurde.

12. Verfahren nach einem oder mehreren der vorangegangenen Ansprüche,
**dadurch gekennzeichnet,**
**dass** das eCommerce-Center dem Verkäufer eine Quittung zusendet.

13. Verfahren nach einem oder mehreren der vorangegangenen Ansprüche,
**dadurch gekennzeichnet,**
**dass** von dem eCommerce-Center eine Zahlung an den Verkäufer veranlasst wird.

14. Verfahren nach Anspruch 13,
**dadurch gekennzeichnet,**
**dass** die an den Verkäufer veranlasste Zahlung mit den Werten verglichen wird, die dem Kunden zur Herstellung der kryptografischen Zeichenkette zur Verfügung standen.

15. Verfahren nach einem oder mehreren der vorangegangenen Ansprüche,
**dadurch gekennzeichnet,**
**dass** der Kunde Werte erhält, die er zur Herstellung von kryptografischen Zeichenketten benutzen kann.

16. Verfahren nach Anspruch 15,
**dadurch gekennzeichnet,**
**dass** der Kunde die Werte nach einer Authentifizierung erhält.

17. Verfahren nach einem oder beiden der Ansprüche 15 und 16,
**dadurch gekennzeichnet,**
**dass** der Kunde die Geldbeträge für die Werte vor Erstellung der kryptografischen Zeichenkette bezahlt.

18. Verfahren nach einem oder beiden der Ansprüche 15 und 16,
**dadurch gekennzeichnet,**
**dass** der Kunde die Geldbeträge für die Werte nach Erstellung der kryptografischen Zeichenkette bezahlt.

## Claims

1. Method, according to which a customer accesses monetary-value data from a loading station, whereby a random number (X) and a payment identification number (PID), which contains data about the customer, are generated in the loading station, whereby a customer system generates a character string with crypto-information, whereby a seller receives the character string as a monetary-value confirmation for a payment, and whereby the seller submits the character string to an e-commerce center for purposes of verification of its validity and for initiating a payment, and whereby the e-commerce center decrypts the character string, that in the loading station the random number (X) and the payment identification number (PID) are combined to form a cryptographic unit in such a way, that only an e-commerce center is capable of decrypting the random number (X) and the payment identification number (PID), from the cryptographic unit that the customer system generates a hash value from the random number (X), the payment identification number (PID) and from purchase data, that the character string with encrypted information contains the purchase data in plain text, the cryptographic unit, and the generated hash value, and that the e-commerce center generates a hash value from the random number and the payment identification number (PID) decrypted from the character string, and that the e-commerce center conducts a comparison of the hash value that it has generated with the hash value transmitted.

2. Method according to Claim 1, **characterized in that** in the loading station the random number (X) and the payment identification number (PID) are combined to form the cryptographic unit in such a way that only an external e-commerce center is capable of decrypting the random number (X) and the payment identification number (PID) from the cryptographic unit.

3. Method according to one of the two Claims 1 or 2, **characterized in that** the random number (X), the payment identification number (PID), and the cryptographic unit are stored temporarily in a crypto module in the customer system.

4. Method to Claim 3, **characterized in that** the customer enters data into the crypto-module during a purchase transaction.

5. Method to one or more of the Claims 3 or 4, **characterized in that** the crypto-module generates the hash value.

6. Method to Claim 5, **characterized in that** the hash value is generated by including the purchase data, the random number (X), and the payment identification number (PID).

7. Method to one or more of the preceding Claims, **characterized in that** the character string contains the purchase data in plain text, the cryptographic unit, and the hash value.

8. Method to one or more of the Claims 3 to 7, **characterized in that** the crypto module digitally signs the character string and stores it in a journal file.

9. Method to one or more of the preceding Claims, **characterized in that** the character string is transmitted directly to the e-commerce center.

10. Method to one or more of the preceding Claims, **characterized in that** the character string is encrypted such that only the e-commerce center can decrypt it.

11. Method according to one or more of the preceding Claims, **characterized in that** the e-commerce center ascertains whether a crypto-module suitable for payment was indeed used to generate the character string, by comparing the hash value that is has generated with the hash value contained in the character string.

12. Method to one or more of the preceding Claims, **characterized in that** the e-commerce center sends a receipt to the seller.

13. Method to one or more of the preceding Claims, **characterized in that** a payment to the seller is initiated by the e-commerce center.

14. Method to Claim 13, **characterized in that** the initiated payment to the seller is compared with the values that were available to the customer for the production of the cryptographic character string.

15. Method to one or more of the preceding Claims, **characterized in that** the customer receives values that he can use for the production of cryptographic character strings.

16. Method to Claim 15, **characterized in that** the customer receives the values after an authentication.

17. Method to one or both of Claims 15 and 16, **characterized in that** the customer pays the monetary sums for the values prior to the generation of the cryptographic character string.

18. Method pursuant to one or both of Claims 15 and 16, **characterized in that** the customer pays the monetary sums for the values after the generation of the cryptographic character string.

## Revendications

1. Procédé selon lequel un client appelle une information à caractère monétaire à partir d'un terminal de chargement, tandis qu'au niveau du terminal de chargement, un nombre aléatoire (X) et un numéro d'identification du paiement (PID) contenant les données du client sont générés, tandis qu'un système client génère une chaîne de caractères avec des informations cryptographiques, tandis qu'un vendeur reçoit la chaîne de caractères comme montant à caractère monétaire pour un paiement, tandis que le vendeur fournit la chaîne de caractères à un centre de commerce électronique pour vérifier sa validité et pour que le paiement soit effectué et tandis que le centre de commerce électronique décode la chaîne de caractères,
qu'au niveau du terminal de chargement, le nombre aléatoire (X) et le numéro d'identification du paiement (PID) sont liés pour former une unité cryptographique de telle façon que seul un centre de commerce électronique est capable de déchiffrer de nouveau le nombre aléatoire (X) et le numéro d'identification du paiement (PID) à partir de l'unité cryptographique, que le système client produit une valeur de hachage à partir du nombre aléatoire (X), du numéro d'identification du paiement (PID) et des informations relatives à l'achat, que la chaîne de caractères avec des informations cryptographiques contient des informations relatives à l'achat en texte en clair, l'unité cryptographique et la valeur de hachage produite, et que le centre de commerce électronique forme une valeur de hachage à partir du nombre aléatoire déchiffré à partir de la chaîne de caractères et du numéro d'identification du paiement et que le centre de commerce électronique effectue une comparaison de la valeur de hachage auto- générée, avec la valeur de hachage transmise.

2. Procédé selon la revendication 1,
**caractérisé en ce que**
au niveau du terminal de chargement, le nombre aléatoire (X) et le numéro d'identification du paiement (PID) sont liés pour former une unité cryptographique de telle façon que seul un centre de commerce électronique externe est capable de déchiffrer de nouveau le nombre aléatoire (X) et le numéro d'identification du paiement (PID) à partir de l'unité cryptographique.

3. Procédé selon l'une des revendications 1 ou 2,
**caractérisé en ce que**
le numéro aléatoire (X), le numéro d'identification de paiement (PID) et l'unité cryptographique sont enregistrés en mémoire tampon dans un module de cryptographie, dans le système client.

4. Procédé selon la revendication 3,
**caractérisé en ce que**
le client saisit des informations dans le module de cryptographie lors d'une opération d'achat

5. Procédé selon l'une quelconque ou les deux revendications 3 ou 4,
**caractérisé en ce que**
le module de cryptographie produit la valeur de hachage.

6. Procédé selon la revendication 5,
**caractérisé en ce que**
la valeur de hachage est produite en tenant compte des données relatives à l'achat, du nombre aléatoire (X) et du numéro d'identification du paiement (PID).

7. Procédé selon l'une quelconque ou plusieurs des revendications précédentes,
**caractérisé en ce que**
la chaîne de caractères contient les données relatives à l'achat entexte en clair, l'unité cryptographique et la valeur de hachage.

8. Procédé selon l'une quelconque ou plusieurs des revendications 3 à 7,
**caractérisé en ce que**
le module cryptographique code la chaîne de caractères de façon numérique et la classe dans un fichier journal.

9. Procédé selon l'une quelconque ou plusieurs des revendications précédentes,
**caractérisé en ce que**
la chaîne de caractères est transmise directement au centre de commerce électronique.

10. Procédé selon l'une quelconque ou plusieurs des revendications précédentes,
**caractérisé en ce que**
la chaîne de caractères est chiffrée de telle façon que seul le centre de commerce électronique est en mesure de la déchiffrer.

11. Procédé selon l'une quelconque ou plusieurs des revendications précédentes,
**caractérisé en ce que**
le centre de commerce électronique vérifie, par la comparaison entre la valeur de hachage auto-générée avec la valeur de hachage contenue dans la chaîne de caractères, si un module de cryptographie convenable aux opérations de paiement a réellement été utilisé pour produire la chaîne de caractères.

12. Procédé selon l'une quelconque ou plusieurs des revendications précédentes,
**caractérisé en ce que**
le centre de commerce électronique envoie un reçu au vendeur.

13. Procédé selon l'une quelconque ou plusieurs des revendications précédentes,
**caractérisé en ce que**
le centre de commerce électronique procède à un paiement en faveur du vendeur.

14. Procédé selon la revendication 13,
**caractérisé en ce que**
le paiement auquel il a été procédé en faveur du vendeur est comparé aux valeurs que le client avait à sa disposition pour produire la chaîne cryptographique.

15. Procédé selon l'une quelconque ou plusieurs des revendications précédentes,
**caractérisé en ce que**
le client reçoit des valeurs qu'il peut utiliser pour produire des chaînes cryptographiques.

16. Procédé selon la revendication 15,
**caractérisé en ce que**
le client reçoit les valeurs après une authentification

17. Procédé selon l'une quelconque ou les deux revendications 15 ou 16
**caractérisé en ce que**
le client paye les sommes d'argent, conformément aux valeurs, avant la production de la chaîne de caractères cryptographiques.

18. Procédé selon l'une quelconque ou les deux revendications 15 ou 16
**caractérisé en ce que**
le client paye les sommes d'argent, conformément aux valeurs, après production de la chaîne de caractères cryptographiques.
